# EUROPÄISCHE PATENTSCHRIFT

(11) **EP 3 013 652 B1**
(45) Veröffentlichungstag und Bekanntmachung des Hinweises auf die Patenterteilung: **18.11.2020**
(21) Anmeldenummer: 14731218.5
(22) Anmeldetag: 13.06.2014
(51) Int. Cl.: B60S 1/34, B60S 1/52

(54) **WISCHARMVORRICHTUNG**
WIPER ARM ARRANGEMENT
DISPOSITIF DE BRAS D'ESSUIE-GLACE

(30) Priorität: 26.06.2013 DE 102013212194
(43) Veröffentlichungstag der Anmeldung: 04.05.2016
(73) Patentinhaber: Robert Bosch GmbH, 70442 Stuttgart (DE)
(72) Erfinder: KRAEMER, Godelieve, 76549 Huegelsheim (DE); ERNST, Waldemar, 71665 Vaihingen/Enz (DE)
(86) Internationale Anmeldenummer: PCT/EP2014/062404
(87) Internationale Veröffentlichungsnummer: WO 2014/206773

(56) Entgegenhaltungen:
- DE-A1- 2 942 086
- DE-A1- 4 415 081
- DE-U1- 8 716 154
- FR-A1- 2 781 743
- GB-A- 2 151 465
- US-A- 3 940 068

## Beschreibung

### Stand der Technik

Es ist bereits eine Wischarmvorrichtung mit zumindest einer Wischflüssigkeitsführeinheit, die zumindest einen Wischflüssigkeitskanal und zumindest eine Kopplungseinheit aufweist, welche dazu vorgesehen ist, mit einer Wischstange eines Wischarms verbunden zu werden, vorgeschlagen worden.

Die US3940068 A und US3940068 A zeigen eine solche Wischarmvorrichtung.

### Offenbarung der Erfindung

Die Erfindung geht aus von einer Wischarmvorrichtung mit zumindest einer Wischflüssigkeitsführeinheit, die zumindest einen Wischflüssigkeitskanal und zumindest eine Kopplungseinheit aufweist, welche dazu vorgesehen ist, mit einer Wischstange eines Wischarms verbunden zu werden.

Es wird vorgeschlagen, dass der zumindest eine Wischflüssigkeitskanal einstückig mit der zumindest einen Kopplungseinheit ausgebildet ist, und wobei die zumindest eine Kopplungseinheit zumindest ein Clip-Befestigungselement aufweist, wobei das zumindest eine Clip-Befestigungselement aus zwei Befestigungsstegen besteht und zwischen zwei kurzen Seiten der zwei Befestigungsstege eine Lücke angeordnet ist, über welche die Wischstange des Wischarms in einen Wischarmaufnahmebereich gebracht werden kann, wobei die Befestigungsstege in einer Ebene senkrecht zu der Haupterstreckungsrichtung der Wischflüssigkeitsführeinheit jeweils eine L-förmige Querschnittsform aufweisen, wobei die zwei Befestigungsstege zueinander gespiegelt sind, wobei eine kurze Seite der L-förmigen Befestigungsstege jeweils teilweise freistehend ist und jeweils senkrecht zu einer zugehörigen langen Seite absteht, wobei die kurzen Seiten der Befestigungsstege jeweils einander zugewandt von den langen Seiten abstehen, wobei die langen Seiten der Befestigungsstege parallel zueinander verlaufen, wobei die zumindest eine Kopplungseinheit zumindest ein Sperrelement aufweist, das zu einer Sicherung der Wischflüssigkeitsführeinheit auf der Wischstange des Wischarms vorgesehen ist, wobei das Sperrelement aus zwei Halteplatten und einem Gewindestift besteht. Vorzugsweise ist der Wischflüssigkeitskanal dazu vorgesehen, Wischflüssigkeit zumindest im Wesentlichen entlang einer Haupterstreckungsrichtung des Wischarms zu führen. Unter einer "Wischflüssigkeitsführeinheit" soll in diesem Zusammenhang insbesondere eine Einheit verstanden werden, die in zumindest einem Betriebszustand dazu vorgesehen ist, Wischflüssigkeit zumindest in einem Teilabschnitt eines Weges insbesondere von einem Speicher an eine zu waschende Oberfläche, wie insbesondere eine Scheibe, zu führen. Vorzugsweise soll darunter insbesondere eine Einheit verstanden werden, die in einem Betriebszustand dazu vorgesehen ist, Wischflüssigkeit zur Reinigung einer Scheibe zumindest in einem Teilabschnitt eines Weges insbesondere von einem Speicher zu der zu reinigenden Scheibe zu führen. Ferner soll in diesem Zusammenhang unter einem "Wischflüssigkeitskanal" insbesondere ein Kanal verstanden werden, der dazu vorgesehen ist, insbesondere zumindest in einem Teilabschnitt Wischflüssigkeit in einem Betrieb der Wischflüssigkeitsverteilungseinheit insbesondere von einem Speicher zu den zumindest zwei Wischdüseneinheiten zu leiten. Vorzugsweise soll darunter ein Kanal verstanden werden, der in zumindest einem Teilabschnitt dazu vorgesehen ist, Wischflüssigkeit zu einer Leitung und/oder Förderung aufzunehmen. Besonders bevorzugt soll darunter insbesondere ein Kanal verstanden werden, der in zumindest einem Betriebszustand zu einer direkten Aufnahme von Wischflüssigkeit vorgesehen ist. Des Weiteren soll unter einer "Kopplungseinheit" in diesem Zusammenhang insbesondere eine Einheit verstanden werden, die zu einer Herstellung einer Verbindung, insbesondere einer zerstörungsfrei lösbaren Verbindung, vorgesehen ist. Vorzugsweise soll darunter eine Einheit verstanden werden, die dazu vorgesehen ist, zumindest die Wischflüssigkeitsführeinheit form-, kraft- und/oder stoffschlüssig mit einer Wischstange eines Wischarms zu verbinden. Besonders bevorzugt soll darunter eine Einheit verstanden werden, die zur Herstellung einer zerstörungsfrei lösbaren Verbindung vorgesehen ist, wobei die Verbindung dabei insbesondere werkzeuglos herstellbar ist. Unter "vorgesehen" soll in diesem Zusammenhang insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Ferner soll in diesem Zusammenhang unter einer "Wischstange" insbesondere ein längliches Bauteil des Wischarms verstanden werden, das sich zumindest im Wesentlichen parallel zu einer Haupterstreckungsrichtung des Wischarms erstreckt. Vorzugsweise soll darunter insbesondere ein Bauteil verstanden werden, das dazu vorgesehen ist, eine Antriebsachse des Wischarms indirekt mit einem Aufnahmebereich für ein Wischblatt zur Übertragung einer Bewegung, insbesondere einer Drehbewegung, zu verbinden. Des Weiteren soll in diesem Zusammenhang unter "einstückig" insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Ferner soll in diesem Zusammenhang unter einer "Haupterstreckungsrichtung" einer Baueinheit insbesondere eine Richtung verstanden werden, welche parallel zu einer längsten Seitenkante eines kleinsten geometrischen Quaders verläuft, welcher die Baueinheit gerade noch vollständig umschließt.

Durch die erfindungsgemäße Ausgestaltung der Wischarmvorrichtung kann insbesondere vorteilhaft eine Anzahl von Teilen gering gehalten werden. Ferner kann dadurch insbesondere eine besonders leicht zu montierende Wischarmvorrichtung bereitgestellt werden. Insbesondere kann dadurch eine leichte Montage der Wischflüssigkeitsführeinheit erreicht werden. Des Weiteren kann dadurch ein leichtes und schnelles Nachrüsten einer Wischarmvorrichtung an einem Wischarm erreicht werden.

Erfindungsgemäß wird vorgeschlagen, dass die zumindest eine Kopplungseinheit zumindest ein Clip-Befestigungselement aufweist. Unter einem "Clip-Befestigungselement" soll in diesem Zusammenhang insbesondere ein Befestigungselement verstanden werden, das zumindest ein Rastmittel aufweist. Das zumindest eine Rastmittel kann dabei sowohl zu einer Verrastung mit dem Befestigungselement selbst und/oder mit einem zu koppelnden Bauteil vorgesehen sein. Dabei soll unter einem "Rastmittel" insbesondere ein federelastisches Mittel zur Herstellung einer Rastverbindung verstanden werden, das dazu vorgesehen ist, bei einer Montage elastisch ausgelenkt zu werden. Dadurch kann eine besonders leicht zu montierende Wischarmvorrichtung bereitgestellt werden. Insbesondere kann dadurch eine besonders vorteilhaft einfache Kopplung erreicht werden. Vorzugsweise kann die Wischflüssigkeitsführeinheit der Wischarmvorrichtung einfach durch einen Bediener auf dem Wischarm aufgeclipst werden. Insbesondere kann dadurch ein leichtes und schnelles Nachrüsten einer Wischarmvorrichtung an einem Wischarm erreicht werden.

Des Weiteren wird vorgeschlagen, dass die zumindest eine Kopplungseinheit zumindest einen Wischarmaufnahmebereich zur Aufnahme der Wischstange aufweist, der zumindest annähernd eine Querschnittform der Wischstange besitzt. Das heißt insbesondere, dass der Wischarmaufnahmebereich eine Querschnittsform besitzt, die zumindest annähernd einer Querschnittsform der Wischstange entspricht. Unter einem "Wischarmaufnahmebereich" soll in diesem Zusammenhang insbesondere ein Bereich verstanden werden, der zur Aufnahme des Wischarms vorgesehen ist. Vorzugsweise weist der Aufnahmebereich insbesondere eine Ausnehmung auf, welche eine Querschnittsform aufweist, die zumindest annähernd einer Querschnittsform des Wischarms in einem aufgenommenen Bereich entspricht. Besonders bevorzugt ist die Ausnehmung in zumindest einer Ebene, von einem Mittelpunkt der Ausnehmung in der Ebene aus betrachtet, in einem Winkelbereich von zumindest 90°, vorzugsweise von zumindest 180° und besonders bevorzugt von zumindest 270° von Wandungen der Kopplungseinheit umgeben. Dabei soll unter "zumindest annähernd entspricht" in diesem Zusammenhang insbesondere verstanden werden, dass zumindest 40 %, vorzugsweise zumindest 60 % und besonders bevorzugt maximal 80 % einer Fläche einer Querschnittsform gegenüber einer Fläche der zumindest annähernd entsprechenden Querschnittsform deckungsgleich ist. Dadurch kann eine besonders vorteilhafte und zuverlässige Kopplung zumindest der Wischflüssigkeitsführeinheit der Wischarmvorrichtung mit dem Wischarm erreicht werden. Insbesondere kann dadurch insbesondere eine besonders einfache und intuitive Montage realisiert werden.

Es wird erfindungsgemäß vorgeschlagen, dass die zumindest eine Kopplungseinheit zumindest ein Sperrelement aufweist, das zu einer Sicherung der Wischflüssigkeitsführeinheit auf der Wischstange des Wischarms vorgesehen ist. Vorzugsweise ist das zumindest eine Sperrelement dazu vorgesehen, das zumindest eine Clip-Befestigungselement, insbesondere gegen ein Öffnen, zu sperren. Besonders bevorzugt ist das zumindest eine Sperrelement dazu vorgesehen, das zumindest eine Rastmittel des zumindest einen Clip-Befestigungselements zu sperren. Unter einem "Sperrelement" soll in diesem Zusammenhang insbesondere ein Element verstanden werden, das zu einer Sperrung bzw. Sicherung einer Verbindung vorgesehen ist. Vorzugsweise soll darunter ein Element verstanden werden, das zu einer Verhinderung eines ungewollten Lösens einer Verbindung, insbesondere einer Verbindung zwischen der Wischflüssigkeitsführeinheit und der Wischstange des Wischarms, vorgesehen ist. Besonders bevorzugt umfasst das Sperrelement zumindest ein Sperrmittel, das dazu vorgesehen ist, zu einer Lösung des Sperrelements aktiv von einem Bediener entfernt, betätigt, umgelegt, verschoben und/oder durch andere, dem Fachmann als sinnvoll erscheinende aktive Handlungen aktiviert bzw. deaktiviert zu werden. Dadurch kann insbesondere verhindert werden, dass sich die Wischflüssigkeitsführeinheit ungewollt von der Wischstange des Wischarms löst. Insbesondere kann dadurch ein Wegdrücken der Wischflüssigkeitsführeinheit von der Wischstange durch den Fahrtwind und/oder ein einfacher Diebstahl verhindert werden.

Es wird weiter vorgeschlagen, dass die Wischarmvorrichtung zumindest ein Windabweiserelement aufweist. Unter einem "Windabweiserelement" soll in diesem Zusammenhang insbesondere eine Einheit verstanden werden, die dazu vorgesehen ist, einen auf die Wischarmvorrichtung wirkenden Fahrtwind abzuweisen und/oder für ein Anpressen der Wischarmvorrichtung an einem Wischarm zu nutzen. Bevorzugt weist das Windabweiserelement zumindest eine konkave Außenfläche auf. Dadurch kann eine besonders vorteilhafte Wischarmvorrichtung bereitgestellt werden. Ferner kann dadurch ein ungewolltes Lösen der Wischarmvorrichtung, beispielsweise durch Fahrtwind, verhindert bzw. vermieden werden.

Ferner wird vorgeschlagen, dass die zumindest eine Wischflüssigkeitsführeinheit das zumindest eine Windabweiserelement aufweist. Vorzugsweise ist das zumindest eine Windabweiserelement einstückig mit dem zumindest einen Wischflüssigkeitskanal und der zumindest einen Kopplungseinheit der zumindest einen Wischflüssigkeitsführeinheit ausgebildet. Dadurch kann insbesondere ein ungewolltes Lösen der Wischflüssigkeitsführeinheit der Wischarmvorrichtung, beispielsweise durch Fahrtwind, von der Wischstange des Wischarms verhindert bzw. vermieden werden. Ferner kann dadurch eine Anzahl von Teilen gering gehalten werden. Dadurch kann wiederum eine einfache Montage erreicht werden.

Des Weiteren wird vorgeschlagen, dass die Wischarmvorrichtung zumindest eine Wischdüseneinheit mit zumindest einem Wischdüsenelement zur Auftragung von Wischflüssigkeit auf eine zu waschende Oberfläche aufweist. Unter einer "Wischdüseneinheit" soll in diesem Zusammenhang insbesondere eine Einheit verstanden werden, die dazu vorgesehen ist, Flüssigkeit, insbesondere eine Wischflüssigkeit, zur Reinigung einer Oberfläche, insbesondere einer Scheibe, aufzubringen. Vorzugsweise ist die Einheit dazu vorgesehen, die Flüssigkeit über ein Wischdüsenelement zur Reinigung einer Scheibe aufzubringen. Dabei soll unter einem "Wischdüsenelement" insbesondere ein Element verstanden werden, das dazu vorgesehen ist, eine Flüssigkeit, insbesondere Wischflüssigkeit zur Reinigung einer Scheibe, insbesondere einer Kraftfahrzeugscheibe, in eine bestimmte Austrittsrichtung zu sprühen. Dabei weist das Düsenelement vorzugsweise ein Anschlusselement zum Anschließen eines Wischwasserschlauchs und/oder einer Wischwasserpumpe insbesondere der Wischdüseneinheit auf. Dadurch kann insbesondere eine zuverlässige Verteilung und/oder Auftragung von Wischflüssigkeit erreicht werden.

Es wird ferner vorgeschlagen, dass die Wischarmvorrichtung zumindest ein Verbindungselement aufweist, welches die zumindest eine Wischdüseneinheit mit dem zumindest einen Wischflüssigkeitskanal der zumindest einen Wischflüssigkeitsführeinheit verbindet. Unter einem "Verbindungselement" soll in diesem Zusammenhang insbesondere ein Element verstanden werden, das dazu vorgesehen ist, die Wischdüseneinheit mit dem Wischflüssigkeitskanal zu verbinden. Vorzugsweise soll darunter ein Element verstanden werden, das dazu vorgesehen ist, Wischflüssigkeit von dem Wischflüssigkeitskanal zu der Wischdüseneinheit zu leiten bzw. zu führen. Besonders bevorzugt ist das Element zumindest teilweise von einem Kanal, wie insbesondere einem Schlauch, gebildet. Dadurch kann vorteilhaft eine Verbindung zwischen der zumindest einen Wischdüseneinheit und dem zumindest einen Wischflüssigkeitskanal realisiert werden. Vorzugsweise kann dadurch eine Übertragung von Wischflüssigkeit von dem zumindest einen Wischflüssigkeitskanal zu der zumindest einen Wischdüseneinheit realisiert werden.

Es wird weiter vorgeschlagen, dass die Wischdüseneinheit zumindest eine Kopplungseinheit aufweist, die in einem montierten Zustand dazu vorgesehen ist, mit einem Wischarm verbunden zu werden. Vorzugsweise ist die Kopplungseinheit in einem montierten Zustand dazu vorgesehen, mit einem Wischarmadapter des Wischarms verbunden zu werden. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden ist und der dazu vorgesehen ist, einen Kopplungsbereich des Wischarmbauteils für eine Kopplung und/oder Kontaktierung mit einem Wischblattadapter bereitzustellen. Dabei soll unter einem "Wischblattadapter" insbesondere ein Adapter verstanden werden, der einen Kontaktbereich zu einem Wischblattbauteil aufweist und mit dem Wischblattbauteil unverlierbar verbunden ist und der dazu vorgesehen ist, einen Kopplungsbereich des Wischblattbauteils für eine Kopplung und/oder Kontaktierung mit dem Wischarmadapter bereitzustellen. Dadurch kann insbesondere eine besonders leicht zu montierende Wischarmvorrichtung bereitgestellt werden. Insbesondere kann dadurch die Wischdüseneinheit ebenfalls mit dem Wischarm verbunden werden. Besonders bevorzugt kann die Wischdüseneinheit getrennt von der Wischflüssigkeitsführeinheit mit dem Wischarm verbunden werden, wodurch eine hohe Flexibilität erreicht werden kann.

Die erfindungsgemäße Wischarmvorrichtung soll hierbei nicht auf die oben beschriebene Anwendung und Ausführungsform beschränkt sein. Insbesondere kann die erfindungsgemäße Wischarmvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischarmvorrichtung mit einer Wischflüssigkeitsführeinheit und mit einer Wischdüseneinheit, einen Wischarm und einen Teilausschnitt eines Wischblatts in einer schematischen Darstellung,
- Fig. 2: die erfindungsgemäße Wischarmvorrichtung mit der Wischflüssigkeitsführeinheit in einer schematischen Schnittdarstellung entlang der Schnittlinie II und
- Fig. 3: die erfindungsgemäße Wischarmvorrichtung mit der Wischflüssigkeitsführeinheit in einer weiteren schematischen Schnittdarstellung entlang der Schnittlinie III.

### Beschreibung der Ausführungsbeispiele

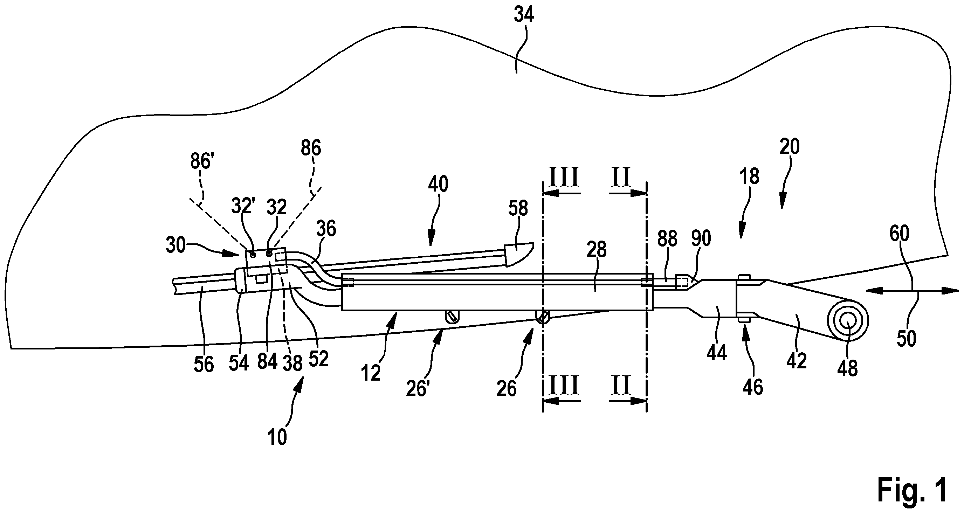

Figur 1 zeigt eine erfindungsgemäße Wischarmvorrichtung 10, einen Wischarm 20 und ein Wischblatt 40. Ferner zeigt Figur 1 eine zu waschende Oberfläche 34 eines nicht weiter sichtbaren Kraftfahrzeugs. Die zu waschende Oberfläche 34 ist von einer Scheibe gebildet.

Der Wischarm 20 weist eine Wischstange 18 auf. Die Wischstange 18 weist zwei Wischarmsegmente 42, 44 und ein Scharnier 46 auf. Die Wischarmsegmente 42, 44 sind über das Scharnier 46 verbunden. Ferner ist im Bereich des Scharniers 46 ein nicht weiter sichtbares Federelement angeordnet. Das nicht weiter sichtbare Federelement ist dazu vorgesehen, in einem Andrückbereich des zweiten Wischarmsegments 44 das zweite Wischarmsegment 44 in Richtung der zu waschenden Oberfläche 34 zu drücken. Die zu waschende Oberfläche 34 ist von einer Kraftfahrzeugscheibe gebildet. Das erste Wischarmsegment 42 ist über eine Achse 48 mit dem nicht weiter sichtbaren Kraftfahrzeug verbunden. Die Achse 48 ist, entlang einer Haupterstreckungsrichtung 50 des Wischarms 20 betrachtet, an einem äußeren Ende des Wischarms 20 mit der Wischstange 18 verbunden. Die Achse 48 wird über einen nicht weiter sichtbaren Antriebsmotor angetrieben. An einem dem Scharnier 46 abgewandten Ende des zweiten Wischarmsegments 44 ist ein Wischarmadapter 52 angeordnet. Der Wischarmadapter 52 ist einstückig mit dem zweiten Wischarmsegment 44 ausgebildet. Der Wischarmadapter 52 ist zur Aufnahme eines Wischblattadapters 54 des Wischblatts 40 vorgesehen. Der Wischarmadapter 52 nimmt den Wischblattadapter 54 auf.

Das Wischblatt 40 weist den Wischblattadapter 54 auf. Das Wischblatt 40 weist den Wischblattadapter 54 zur Kopplung mit dem Wischarm 20 auf. Ferner weist das Wischblatt 40 eine Windabweisereinheit 56, zwei nicht weiter sichtbare Federschienen, eine nicht weiter sichtbare Wischlippe und zwei Endkappen 58, wovon lediglich eine sichtbar ist, auf. Das Wischblatt 40 wischt in einem Betriebszustand über die zu waschende Oberfläche 34. Die nicht weiter sichtbare Wischlippe des Wischblatts 40 ist während eines Wischbetriebszustands dazu vorgesehen, an der zu waschenden Oberfläche 34 anzuliegen und über diese zu wischen. Die nicht weiter sichtbare Wischlippe ist über die nicht weiter sichtbaren Federschienen in der Windabweisereinheit 56 gehalten.

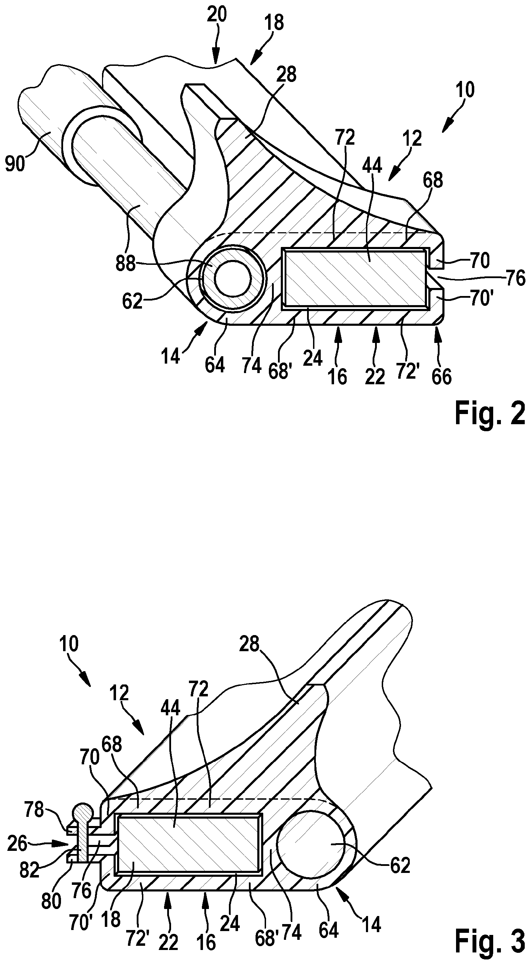

Die Wischarmvorrichtung 10 weist eine Wischflüssigkeitsführeinheit 12 auf. Die Wischflüssigkeitsführeinheit 12 weist eine Haupterstreckungsrichtung 60 auf, die in einem montierten Zustand einer Haupterstreckungsrichtung 50 des Wischarms 20 entspricht. Die Wischflüssigkeitsführeinheit 12 weist einen Wischflüssigkeitskanal 14 auf. Der Wischflüssigkeitskanal 14 ist dazu vorgesehen, Wischflüssigkeit entlang der Haupterstreckungsrichtung 50 des Wischarms 20 zu führen. Der Wischflüssigkeitskanal 14 weist eine zylindrische Ausnehmung 62 auf. Die zylindrische Ausnehmung 62 des Wischflüssigkeitskanals 14 erstreckt sich entlang der Haupterstreckungsrichtung 60 der Wischflüssigkeitsführeinheit 12 über eine gesamte Länge der Wischflüssigkeitsführeinheit 12. Die zylindrische Ausnehmung 62 erstreckt sich parallel zu der Haupterstreckungsrichtung 60 der Wischflüssigkeitsführeinheit 12. Die zylindrische Ausnehmung 62 wird von einem Grundkörper 64 des Wischflüssigkeitskanals 14 begrenzt (Figur 3).

Ferner weist die Wischflüssigkeitsführeinheit 12 eine Kopplungseinheit 16 auf. Die Kopplungseinheit 16 ist dazu vorgesehen, mit der Wischstange 18 des Wischarms 20 verbunden zu werden. Die Kopplungseinheit 16 ist dazu vorgesehen, die Wischflüssigkeitsführeinheit 12 mit der Wischstange 18 des Wischarms 20 zu verbinden. Die Kopplungseinheit 16 ist dazu vorgesehen, mit dem zweiten Wischarmsegment 44 der Wischstange 18 verbunden zu werden. Ferner weist die Kopplungseinheit 16 ein Clip-Befestigungselement 22 auf. Die Kopplungseinheit 16 weist einen Grundkörper 66 auf, der das Clip-Befestigungselement 22 umfasst. Das Clip-Befestigungselement 22 besteht aus zwei Befestigungsstegen 68, 68'. Die Befestigungsstege 68, 68' sind jeweils von Rastelementen gebildet. Die Befestigungsstege 68, 68' weisen, in einer Ebene senkrecht zu der Haupterstreckungsrichtung 60 der Wischflüssigkeitsführeinheit 12 betrachtet, jeweils eine L-förmige Querschnittsform auf, wobei die zwei Befestigungsstege 68, 68' zueinander gespiegelt sind. Eine kurze Seite 70, 70' der L-förmigen Befestigungsstege 68, 68' ist jeweils teilweise freistehend und steht jeweils senkrecht zu einer zugehörigen langen Seite 72, 72' ab. Die kurzen Seiten 70, 70' der Befestigungsstege 68, 68' stehen jeweils einander zugewandt von den langen Seiten 72, 72' ab. Die langen Seiten 72, 72' der Befestigungsstege 68, 68' verlaufen parallel zueinander. Die zwei Befestigungsstege 68, 68' sind an den den kurzen Seiten 70, 70' abgewandten Enden der langen Seiten 72, 72' über eine Grundseite 74 des Grundkörpers 66 der Kopplungseinheit 16 miteinander verbunden (Figur 2, 3).

Die Kopplungseinheit 16 weist des Weiteren einen Wischarmaufnahmebereich 24 auf. Der Wischarmaufnahmebereich 24 ist zu einer Aufnahme der Wischstange 18 des Wischarms 20 vorgesehen. Der Wischarmaufnahmebereich 24 ist zu einer Aufnahme des zweiten Wischarmsegments 44 der Wischstange 18 vorgesehen. Ferner besitzt der Wischarmaufnahmebereich 24 annähernd die Querschnittsform der Wischstange 18. Der Wischarmaufnahmebereich 24 besitzt, in einer Ebene senkrecht zu der Haupterstreckungsrichtung 60 der Wischflüssigkeitsführeinheit 12 betrachtet, eine Querschnittsform, die annähernd einer Querschnittsform der Wischstange 18 entspricht. Der Wischarmaufnahmebereich 24 erstreckt sich entlang der Haupterstreckungsrichtung 60 der Wischflüssigkeitsführeinheit 12 über eine gesamte Länge der Wischflüssigkeitsführeinheit 12. Der Wischarmaufnahmebereich 24 erstreckt sich parallel zu der Haupterstreckungsrichtung 60 der Wischflüssigkeitsführeinheit 12. Der Wischarmaufnahmebereich 24 ist, in einer Ebene senkrecht zu der Haupterstreckungsrichtung 60 der Wischflüssigkeitsführeinheit 12 betrachtet, von vier Seiten durch den Grundkörper 66 der Kopplungseinheit 16 begrenzt. Der Wischarmaufnahmebereich 24 ist in eine Richtung durch die Grundseite 74 des Grundkörpers 66 begrenzt. In zwei weitere Richtungen ist der Wischarmaufnahmebereich 24 durch die zwei langen Seiten 72, 72' der zwei Befestigungsstege 68, 68' begrenzt. In eine vierte Richtung ist der Wischarmaufnahmebereich 24 durch die zwei kurzen Seiten 70, 70' der zwei Befestigungsstege 68, 68' begrenzt. Zwischen den zwei kurzen Seiten 70, 70' der zwei Befestigungsstege 68, 68' ist eine Lücke 76 angeordnet, über welche die Wischstange 18 des Wischarms 20 in den Wischarmaufnahmebereich 24 gebracht werden kann. Dabei werden durch Druck die beiden Befestigungsstege 68, 68' nach außen elastisch ausgelenkt, so dass sich die Lücke 76 vergrößert und die Wischstange 18 durch die Lücke 76 geschoben werden kann (Figur 2, 3).

Ferner weist die Kopplungseinheit 16 zwei Sperrelemente 26, 26' auf. Die Sperrelemente 26 sind zu einer Sicherung der Wischflüssigkeitsführeinheit 12 auf der Wischstange 18 des Wischarms 20 vorgesehen ist. Das Sperrelement 26 ist dazu vorgesehen, ein ungewolltes Lösen der Wischflüssigkeitsführeinheit 12 von der Wischstange 18, wie beispielsweise durch Fahrtwind, zu verhindern. Die Sperrelemente 26, 26' bestehen jeweils aus zwei Halteplatten 78, 80 und einem Gewindestift 82. Die Sperrelemente 26, 26' sind identisch ausgebildet. Die Halteplatten 78, 80 sind jeweils halbkreisförmig und mit den beiden Befestigungsstegen 68, 68' einstückig verbunden. Die ersten Halteplatten 78 der Sperrelemente 26, 26' weisen jeweils eine Durchgangsbohrung auf und sind an einem Ende der kurzen Seite 70 des ersten Befestigungsstegs 68 der Kopplungseinheit 16 angeordnet. Die zweiten Halteplatten 80 der Sperrelemente 26, 26' weisen jeweils eine Gewindebohrung auf und sind an einem Ende der kurzen Seite 70' des zweiten Befestigungsstegs 68' der Kopplungseinheit 16 angeordnet. Über die Gewindestifte 82 können die ersten Halteplatten 78 jeweils über die Durchgangsbohrungen mit der zugehörigen zweiten Halteplatte 80 über die Gewindebohrungen verschraubt werden. Durch die zwei Sperrelemente 26, 26' kann verhindert werden, dass in einem geschlossenen Zustand der Sperrelemente 26, 26' die Befestigungsstege 68, 68' elastisch nach Außen ausgelenkt werden können. Grundsätzlich wäre jedoch auch eine andere, dem Fachmann als sinnvoll erscheinende Ausgestaltung des zumindest einen Sperrelements 26, 26' denkbar. Das zumindest eine Sperrelement 26, 26' kann dabei eine vollkommen differierende Funktionsweise aufweisen. Für das zumindest eine Sperrelement 26, 26' ist insbesondere die Funktion entscheidend (Figur 1, 3).

Der Wischflüssigkeitskanal 14 der Wischflüssigkeitsführeinheit 12 ist einstückig mit der Kopplungseinheit 16 der Wischflüssigkeitsführeinheit 12 ausgebildet. Der Grundkörper 64 des Wischflüssigkeitskanals 14 und der Grundkörper 66 der Kopplungseinheit 16 sind aus einem Guss hergestellt. Der Grundkörper 64 des Wischflüssigkeitskanals 14 und der Grundkörper 66 der Kopplungseinheit 16 bestehen aus demselben Material. Der Grundkörper 64 des Wischflüssigkeitskanals 14 und der Grundkörper 66 der Kopplungseinheit 16 bestehen aus Kunststoff. Der Wischflüssigkeitskanal 14 ist auf einer der Lücke 76 abgewandten Seite der Kopplungseinheit 16 angeordnet (Figur 2, 3).

Ferner weist die Wischarmvorrichtung 10 ein Windabweiserelement 28 auf. Die Wischflüssigkeitsführeinheit 12 weist das Windabweiserelement 28 auf. Das Windabweiserelement 28 ist einstückig mit dem Wischflüssigkeitskanal 14 und der Kopplungseinheit 16 der Wischflüssigkeitsführeinheit 12 ausgebildet. Das Windabweiserelement 28 erstreckt sich entlang der Haupterstreckungsrichtung 60 der Wischflüssigkeitsführeinheit 12 über eine gesamte Länge der Wischflüssigkeitsführeinheit 12. Das Windabweiserelement 28 erstreckt sich parallel zu der Haupterstreckungsrichtung 60 der Wischflüssigkeitsführeinheit 12. Das Windabweiserelement 28 schließt, in einer von dem zweiten Befestigungssteg 68' abgewandten Richtung, direkt an den ersten Befestigungssteg 68 der Kopplungseinheit 16 an. Das Windabweiserelement 28 erstreckt sich in einer Breite, senkrecht zu der Haupterstreckungsrichtung 60 der Wischflüssigkeitsführeinheit 12, im Wesentlichen über den gesamten Wischflüssigkeitskanal 14 und die gesamte Kopplungseinheit 16. Grundsätzlich wäre jedoch auch denkbar, dass, wie gestrichelt in den Figuren 2 und 3 dargestellt, die Wischarmvorrichtung 10 bzw. die Wischflüssigkeitsführeinheit 12 kein Windabweiserelement 28 aufweist.

Die Wischflüssigkeitsführeinheit 12 weist, abgesehen von den zwei Sperrelementen 26, 26', entlang der Haupterstreckungsrichtung 60 der Wischflüssigkeitsführeinheit 12 betrachtet, über eine gesamte Länge eine gleichbleibende Querschnittsform auf. Die Wischflüssigkeitsführeinheit 12 ist, abgesehen von den zwei Sperrelementen 26, 26', in einem Extrusionsverfahren hergestellt. Die zwei Sperrelemente 26, 26' werden nachträglich angeformt. Grundsätzlich sind jedoch auch andere dem Fachmann als sinnvoll erscheinende Herstellungsverfahren denkbar.

Des Weiteren weist die Wischarmvorrichtung 10 eine Wischdüseneinheit 30 auf. Die Wischdüseneinheit 30 weist zwei Wischdüsenelemente 32, 32' auf. Die Wischdüsenelemente 32, 32' sind jeweils von Düsen gebildet. Ferner sind die Wischdüsenelemente 32, 32' zur Auftragung von Wischflüssigkeit auf eine zu waschende Oberfläche 34 vorgesehen. Die Wischdüsenelemente 32, 32' sind zur Auftragung von Wischflüssigkeit auf die Scheibe vorgesehen. Die Wischdüsenelemente 32, 32' sind in einem Grundkörper 84 der Wischdüseneinheit 30 integriert. Die Wischdüsenelemente 32, 32' sind durch einen nicht weiter sichtbaren Wischflüssigkeitskanal verbunden, der in den Grundkörper 84 eingebracht ist. Der nicht weiter sichtbare Wischflüssigkeitskanal ist zudem bis zu einer Außenkante des Grundkörpers 84 geführt. Die Wischdüsenelemente 32, 32' weisen ferner jeweils eine Austrittsrichtung 86, 86' auf, die auf die zu waschende Oberfläche 34 gerichtet ist. Ferner weist die Wischdüseneinheit 30 eine Kopplungseinheit 38 auf. Die Kopplungseinheit 38 der Wischdüseneinheit 30 ist in einem montierten Zustand dazu vorgesehen, mit dem Wischarm 20 verbunden zu werden. Die Kopplungseinheit 38 der Wischdüseneinheit 30 ist in einem montierten Zustand dazu vorgesehen, mit dem Wischarmadapter 52 des Wischarms 20 verbunden zu werden. Die Kopplungseinheit 38 der Wischdüseneinheit 30 ist nicht weiter sichtbar mit dem Wischarmadapter 52 gekoppelt. Ferner ist die Kopplungseinheit 38 der Wischdüseneinheit 30 dazu vorgesehen, die Wischdüseneinheit 30 mit dem Wischarmadapter 52 zu verbinden. Die Kopplungseinheit 38 der Wischdüseneinheit 30 ist einstückig mit dem Grundkörper 84 der Wischdüseneinheit 30 ausgebildet (Figur 1). Grundsätzlich wäre jedoch auch denkbar, dass die Wischdüseneinheit 30 in dem Wischblatt 40, insbesondere in dem Wischblattadapter 54, integriert ist.

Des Weiteren weist die Wischarmvorrichtung 10 ein erstes Verbindungselement 36 auf. Das erste Verbindungselement 36 verbindet die Wischdüseneinheit 30 mit dem Wischflüssigkeitskanal 14 der Wischflüssigkeitsführeinheit 12. Das erste Verbindungselement 36 verbindet den nicht weiter sichtbaren Wischflüssigkeitskanal der Wischdüseneinheit 30 mit dem Wischflüssigkeitskanal 14 der Wischflüssigkeitsführeinheit 12. Das erste Verbindungselement 36 ist von einem Schlauch gebildet. Das erste Verbindungselement 36 ist mit einem ersten Ende in einem Endbereich des Wischflüssigkeitskanals 14 der Wischflüssigkeitsführeinheit 12 eingeklebt. Ferner ist das erste Verbindungselement 36 mit einem dem ersten Ende gegenüberliegenden zweiten Ende in einem Endbereich des nicht weiter sichtbaren Wischflüssigkeitskanals der Wischdüseneinheit 30 eingeklebt (Figur 1). Grundsätzlich wäre jedoch auch denkbar, dass das erste Verbindungselement 36 jeweils über Anschlussstutzen mit der Wischdüseneinheit 30 und/oder der Wischflüssigkeitsführeinheit 12 verbunden ist.

Ferner weist die Wischarmvorrichtung 10 ein zweites Verbindungselement 88 auf. Das zweite Verbindungselement 88 verbindet eine Wischflüssigkeitszufuhr 90 mit dem Wischflüssigkeitskanal 14 der Wischflüssigkeitsführeinheit 12. Die Wischflüssigkeitszufuhr 90 ist von einem Wischflüssigkeitszuführschlauch gebildet. Das zweite Verbindungselement 88 ist von einem festen Rohr gebildet. Das zweite Verbindungselement 88 ist mit einem ersten Ende in einem Endbereich der Wischflüssigkeitszufuhr 90 eingeklebt. Ferner ist das zweite Verbindungselement 88 mit einem dem ersten Ende gegenüberliegenden zweiten Ende in einem Endbereich des Wischflüssigkeitskanals 14 der Wischflüssigkeitsführeinheit 12 eingeklebt (Figur 1, 2). Grundsätzlich wäre jedoch auch denkbar, dass das Verbindungselement 88 bereits in einem Stück mit dem Wischflüssigkeitskanal 14 hergestellt ist. Ferner wäre grundsätzlich auch denkbar, dass das Verbindungselement 88 jeweils über Anschlussstutzen mit der Wischflüssigkeitsführeinheit 12 und/oder der Wischflüssigkeitszufuhr 90 verbunden ist.

Der Wischarm 20 und die Wischarmvorrichtung 10 bilden ein Wischarmsystem.

## Patentansprüche

1. Wischarmvorrichtung mit zumindest einer Wischflüssigkeitsführeinheit (12), die zumindest einen Wischflüssigkeitskanal (14) und zumindest eine Kopplungseinheit (16) aufweist, welche dazu vorgesehen ist, mit einer Wischstange (18) eines Wischarms (20) verbunden zu werden, wobei der zumindest eine Wischflüssigkeitskanal (14) einstückig mit der zumindest einen Kopplungseinheit (16) ausgebildet ist, und wobei die zumindest eine Kopplungseinheit (16) zumindest ein Clip-Befestigungselement (22) aufweist, wobei das zumindest eine Clip-Befestigungselement (22) aus zwei Befestigungsstegen (68, 68') besteht und zwischen zwei kurzen Seiten (70, 70') der zwei Befestigungsstege (68, 68') eine Lücke (76) angeordnet ist, über welche die Wischstange (18) des Wischarms (20) in einen Wischarmaufnahmebereich (24) gebracht werden kann, wobei die Befestigungsstege (68, 68') in einer Ebene senkrecht zu der Haupterstreckungsrichtung (60) der Wischflüssigkeitsführeinheit (12) jeweils eine L-förmige Querschnittsform aufweisen, wobei die zwei Befestigungsstege (68, 68') zueinander gespiegelt sind, wobei eine kurze Seite (70, 70') der L-förmigen Befestigungsstege (68, 68') jeweils teilweise freistehend ist und jeweils senkrecht zu einer zugehörigen langen Seite (72, 72') absteht, wobei die kurzen Seiten (70, 70') der Befestigungsstege (68, 68') jeweils einander zugewandt von den langen Seiten (72, 72') abstehen, wobei die langen Seiten (72, 72') der Befestigungsstege (68, 68') parallel zueinander verlaufen, **dadurch gekennzeichnet, dass** die zumindest eine Kopplungseinheit (16) zumindest ein Sperrelement (26, 26') aufweist, das zu einer Sicherung der Wischflüssigkeitsführeinheit (12) auf der Wischstange (18) des Wischarms (20) vorgesehen ist, wobei das Sperrelement (26, 26') aus zwei Halteplatten (78, 80) und einem Gewindestift (82) besteht.

2. Wischarmvorrichtung nach Anspruch 1, **dadurch gekennzeichnet, dass** die zumindest eine Kopplungseinheit (16) zumindest einen Wischarmaufnahmebereich (24) zur Aufnahme der Wischstange (18) aufweist, der zumindest annähernd eine Querschnittsform der Wischstange (18) besitzt.

3. Wischarmvorrichtung nach einem der vorhergehenden Ansprüche, **gekennzeichnet durch** zumindest ein Windabweiserelement (28).

4. Wischarmvorrichtung nach Anspruch 3, **dadurch gekennzeichnet, dass** die zumindest eine Wischflüssigkeitsführeinheit (12) zumindest eine Windabweiserelement (28) aufweist.

5. Wischarmvorrichtung nach einem der vorhergehenden Ansprüche, **gekennzeichnet durch** zumindest eine Wischdüseneinheit (30) mit zumindest einem Wischdüsenelement (32, 32') zur Auftragung von Wischflüssigkeit auf eine zu waschende Oberfläche (34).

6. Wischarmvorrichtung nach Anspruch 5, **gekennzeichnet durch** zumindest ein Verbindungselement (36), welches die zumindest eine Wischdüseneinheit (30) mit dem zumindest einen Wischflüssigkeitskanal (14) der zumindest einen Wischflüssigkeitsführeinheit (12) verbindet.

7. Wischarmvorrichtung zumindest nach Anspruch 5, **dadurch gekennzeichnet, dass** die Wischdüseneinheit (30) zumindest eine Kopplungseinheit (38) aufweist, die in einem montierten Zustand dazu vorgesehen ist, mit einem Wischarm (20) verbunden zu werden.

8. Wischarmsystem mit einem Wischarm (20) und mit einer Wischarmvorrichtung (10) nach einem der vorhergehenden Ansprüche.

## Claims

1. Wiper arm device having at least one wiper-fluid-guiding unit (12) which has at least one wiper fluid duct (14) and at least one coupling unit (16) which is provided in order to be connected to a wiper rod (18) of a wiper arm (20), wherein the at least one wiper fluid duct (14) is formed integrally with the at least one coupling unit (16), and wherein the at least one coupling unit (16) has at least one clip fastening element (22), wherein the at least one clip fastening element (22) consists of two fastening webs (68, 68') and a gap (76) is arranged between two short sides (70, 70') of the two fastening webs (68, 68'), via which gap the wiper rod (18) of the wiper arm (20) can be brought into a wiper-arm-receiving region (24), wherein the fastening webs (68, 68') each have a cross-sectional shape in the form of a L in a plane perpendicular to the main direction of extent (60) of the wiper-fluid-guiding unit (12), wherein the two fastening webs (68, 68') are mirrored with respect to each other, wherein a short side (70, 70') of the L-shaped fastening webs (68, 68') is in each case partially freestanding and in each case protrudes perpendicularly to an associated long side (72, 72'), wherein the short sides (70, 70') of the fastening webs (68, 68') each protrude, facing one another, from the long sides (72, 72'), wherein the long sides (72, 72') of the fastening webs (68, 68') run parallel to one another, **characterized in that** the at least one coupling unit (16) has at least one blocking element (26, 26') which is provided for securing the wiper-fluid-guiding unit (12) on the wiper rod (18) of the wiper arm (20), wherein the blocking element (26, 26') consists of two holding plates (78, 80) and a threaded pin (82).

2. Wiper arm device according to Claim 1, **characterized in that** the at least one coupling unit (16) has at least one wiper-arm-receiving region (24) for receiving the wiper rod (18), said wiper-arm-receiving region at least approximately having a cross-sectional shape of the wiper rod (18) .

3. Wiper arm device according to either of the preceding claims, **characterized by** at least one wind deflector element (28).

4. Wiper arm device according to Claim 3, **characterized in that** the at least one wiper-fluid-guiding unit (12) has at least one wind deflector element (28).

5. Wiper arm device according to one of the preceding claims, **characterized by** at least one wiper nozzle unit (30) with at least one wiper nozzle element (32, 32') for applying wiper fluid to a surface (34) to be washed.

6. Wiper arm device according to Claim 5, **characterized by** at least one connecting element (36) which connects the at least one wiper nozzle unit (30) to the at least one wiper fluid duct (14) of the at least one wiper-fluid-guiding unit (12) .

7. Wiper arm device at least according to Claim 5, **characterized in that** the wiper nozzle unit (30) has at least one coupling unit (38) which in a mounted state is provided to be connected to a wiper arm (20).

8. Wiper arm system having a wiper arm (20) and having a wiper arm device (10) according to one of the preceding claims.

## Revendications

1. Dispositif pour bras d'essuie-glace comprenant au moins une unité de guidage de liquide d'essuie-glace (12) qui comporte au moins un conduit de liquide d'essuie-glace (14) et au moins une unité d'accouplement (16) qui est prévue pour être reliée à une tige d'essuie-glace (18) d'un bras d'essuie-glace (20), l'au moins un conduit de liquide d'essuie-glace (14) étant formé d'une seule pièce avec l'au moins une unité d'accouplement (16), et l'au moins une unité d'accouplement (16) comportant au moins un élément de fixation par clip (22), l'au moins un élément de fixation par clip (22) comprenant deux nervures de fixation (68, 68') et un espace (76) étant ménagé entre deux petits côtés (70, 70') des deux nervures de fixation (68, 68') et permettant d'amener la tige d'essuie-glace (18) du bras d'essuie-glace (20) dans une zone de réception de bras d'essuie-glace (24), les nervures de fixation (68, 68') ayant chacune une forme de L en coupe transversale dans un plan perpendiculaire à la direction d'extension principale (60) de l'unité de guidage de liquide d'essuie-glace (12), les deux nervures de fixation (68, 68') étant à symétrie spéculaire l'une par à l'autre, un petit côté (70, 70') de chacune des nervures de fixation en forme de L (68, 68') étant partiellement détaché et faisant saillie perpendiculairement à un grand côté associé (72, 72'), les petits côtés (70, 70') des nervures de fixation (68, 68') faisant saillie des grands côtés (72, 72') en étant dirigés l'un vers l'autre, les grands côtés (72, 72') des nervures de fixation (68, 68') s'étendant parallèlement l'un à l'autre, **caractérisé en ce que** l'au moins une unité d'accouplement (16) comporte au moins un élément de blocage (26, 26') qui est prévu pour fixer l'unité de guidage de liquide d'essuie-glace (12) sur la tige d'essuie-glace (18) du bras d'essuie-glace (20), l'élément de blocage (26, 26') comprenant deux plaques de retenue (78, 80) et une tige filetée (82) .

2. Dispositif pour bras d'essuie-glace selon la revendication 1, **caractérisé en ce que** l'au moins une unité d'accouplement (16) comporte au moins une zone de réception de bras d'essuie-glace (24) qui est destinée à recevoir la tige d'essuie-glace (18) et qui a au moins approximativement la forme en coupe transversale de la tige d'essuie-glace (18).

3. Dispositif pour bras d'essuie-glace selon l'une des revendications précédentes, **caractérisé par** au moins un élément déflecteur de vent (28).

4. Dispositif pour bras d'essuie-glace selon la revendication 3, **caractérisé en ce que** l'au moins une unité de guidage de liquide d'essuie-glace (12) comporte au moins un élément déflecteur de vent (28).

5. Dispositif pour bras d'essuie-glace selon l'une des revendications précédentes, **caractérisé par** au moins une unité de buses d'essuie-glace (30) comprenant au moins un élément de buse d'essuie-glace (32, 32') destiné à appliquer un liquide d'essuie-glace sur une surface à laver (34).

6. Dispositif pour bras d'essuie-glace selon la revendication 5, **caractérisé par** au moins un élément de liaison (36) qui relie l'au moins une unité de buses d'essuie-glace (30) à l'au moins un conduit de liquide d'essuie-glace (14) de l'au moins une unité de guidage de liquide d'essuie-glace (12).

7. Dispositif pour bras d'essuie-glace au moins selon la revendication 5, **caractérisé en ce que** l'unité de buses d'essuie-glace (30) comporte au moins une unité d'accouplement (38) qui est prévue, à l'état monté, pour être reliée à un bras d'essuie-glace (20).

8. Système de bras d'essuie-glace comprenant un bras d'essuie-glace (20) et un dispositif pour bras d'essuie-glace (10) selon l'une des revendications précédentes.
